Europäisches Patentamt

European Patent Office

Office européen des brevets

(11) Veröffentlichungsnummer: **0 333 238**

**A1**

## (12) EUROPÄISCHE PATENTANMELDUNG

(21) Anmeldenummer: **89200138.9**

(22) Anmeldetag: **24.01.89**

(51) Int. Cl.⁴: **G02B 6/44**

(30) Priorität: **29.01.88 DE 3802576**

(43) Veröffentlichungstag der Anmeldung:
**20.09.89 Patentblatt 89/38**

(84) Benannte Vertragsstaaten:
**DE ES FR GB IT**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **ES FR GB IT**

(72) Erfinder: **Wirtz, Peter**
**Wüstenherscheid 6 a**
**D-5060 Bergisch Gladbach(DE)**
Erfinder: **Caspar, Hans-Peter**
**Leostrasse 28**
**D-5210 Troisdorf(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Verfahren zur Herstellung eines optischen Kabels mit LWL-Flachbändern.**

(57) Die Erfindung betrifft ein Verfahren zur Herstellung eines optischen Kabels, in dessen innere extrudierte Hülle ein Stapel aus mehreren LWL-Flachbändern einzubringen ist. Die Gleitfähigkeit der einzelnen Flachbänder gegeneinander wird dadurch verbessert, daß der Stapel vor dem Einlauf in einen Extruder durch eine mit einem gelartigen Benetzungsmittel gefüllte Benetzungseinrichtung geführt wird, in welcher die einzelnen LWL-Flachbänder (6) zunächst aufgespreizt und dann wieder zu einem kompakten Stapel (8) vereinigt werden.

Fig.1

## Verfahren zur Herstellung eines optischen Kabels mit LWL-Flachbändern

Die Erfindung bezieht sich auf ein Verfahren zur Herstellung eines optischen Kabels, in dessen innere extrudierte Hülle ein Stapel aus mehreren LWL-Flachbändern einzubringen ist.

Ein derartiges Verfahren und eine Anordnung zur Ausübung dieses Verfahrens sind in der US-PS 41 29 468 beschrieben. Dort werden mehrere LWL-Flachbänder, welche jeweils aus einer Mehrzahl von nebeneinander verbundenen LWL bestehen, zu einem Stapel zusammengeführt, welcher danach durch einen Extruder läuft, welcher eine Hülle herumextrudiert.

Der Erfindung liegt die Aufgabe zugrunde, das Verfahren und die Vorrichtung der eingangs genannten Art derart zu gestalten, daß die Gleitfähigkeit der einzelnen LWL-Flachbänder im Stapel auf einfache Weise verbessert wird.

Die Lösung gelingt dadurch, daß der Stapel vor dem Einlauf in einen Extruder durch eine mit einem gelartigen Benetzungsmittel gefüllte Benetzungseinrichtung geführt wird, in welcher die einzelnen LWL-Flachbänder zunächst aufgespreizt und dann wieder zu einem kompakten Stapel vereinigt werden.

Durch die Benetzung mit einer gelartigen Substanz wird ein störungsfreier Lauf des Stapels durch den Extruder und durch nachgeordnete Fertigungseinrichtungen erleichtert. Relativverschiebungen der Bänder, wie sie bei einer Tordierung oder bei einer Wendelung entstehen, sind störungsfrei möglich. Insbesondere wird auch die Biegbarkeit des fertigen optischen Kabels verbessert.

Im allgemeinen wird auch der zwischen der aufextrudierten Hülle und dem LWL-Flachbandstapel verbleibende Zwischenraum in üblicher Weise mit einer gelartigen Masse gefüllt, welche dann eine Längswasserdichtheit bewirkt. Würde man das Gel ohne erfindungsgemäße vorherige Benetzung der LWL-Flachbänder in die Hülle einbringen, könnte es nicht zwischen die einzelnen LWL-Flachbänder eindringen, so daß offene Wege für das Weiterleiten von Längswasser bestehen bleiben würden.

Da der LWL-Flachbandstapel in kompakter Form in die Benetzungseinrichtung ein- und wieder austritt, aber nur im Innenraum aufgeweitet verläuft, können die Zuführ- und Ausführöffnungen der Benetzungseinrichtung genügend dicht gestaltet werden, so daß das Benetzungsmittel mit erheblichem Druck zugeführt werden darf, ohne daß es durch die Öffnungen austritt. Durch den hohen Druck wird eine allseitig vollständige Benetzung der Oberflächen der LWL-Flachbänder gewährleistet.

Eine vorteilhafte Vorrichtung zur Ausübung des erfindungsgemäßen Verfahrens ist dadurch gekennzeichnet, daß die einzelnen LWL-Flachbänder durch deren Abstände vergrößernde, sich über einen kurzen mittleren Längsbereich einer gelgefüllten Gelkammer erstreckende Führungskanäle geführt sind, die eine lichte Weite von mehr als das 1,5 fache der Dicke der Flachbänder aufweisen.

Die lichte Weite der Führungskanäle sollte nicht zu eng sein, damit das Gel in ihnen nicht abgestreift wird.

Bei einer bevorzugten Ausführungsform einer solchen Anordnung ist vorgesehen, daß die Benetzungseinrichtung vor dem Extruder an einer den aus LWL-Flachbändern gebildeten Stapel tordierenden Einrichtung mitdrehbar angeordnet ist. Eine beispielsweise geeignete tordierende Einrichtung ist in der US-PS 41 29 468 beschrieben.

Das Benetzungsmittel wird vorteilhaft aus einem nicht mitrotierenden Behälter zugeführt. Dazu ist vorteilhaft vorgesehen, daß das Benetzungsmittel über einen zur Drehachse koaxialen, in einem mitrotierenden Bauteil eingebrachten Ringkanal zugeführt ist, in welchem eine nicht rotierende Zuleitung mündet, welche durch ein den Ringkanal abschließendes nicht rotierendes Gleitelement geleitet ist.

Die Erfindung wird anhand der Beschreibung der Zeichnung näher erläutert.

Fig. 1 zeigt einen Längsschnitt durch eine erfindungsgemäße Anordnung zur Ausübung des erfindungsgemäßen Verfahrens.

Fig. 2 zeigt einen Schnitt durch die Anordnung nach Fig. 1 durch die Bandführungsebene bei entferntem Abschlußdeckel.

Mit einem Auslaßteil 1 einer ansonsten nicht dargestellten rotierenden LWL-Flachband-Zuführeinrichtung, beispielsweise der in der US-PS 41 28 468 beschriebenen Art, ist der Grundkörper 2 einer erfindungsgemäßen Benetzungseinrichtung drehfest verbunden.

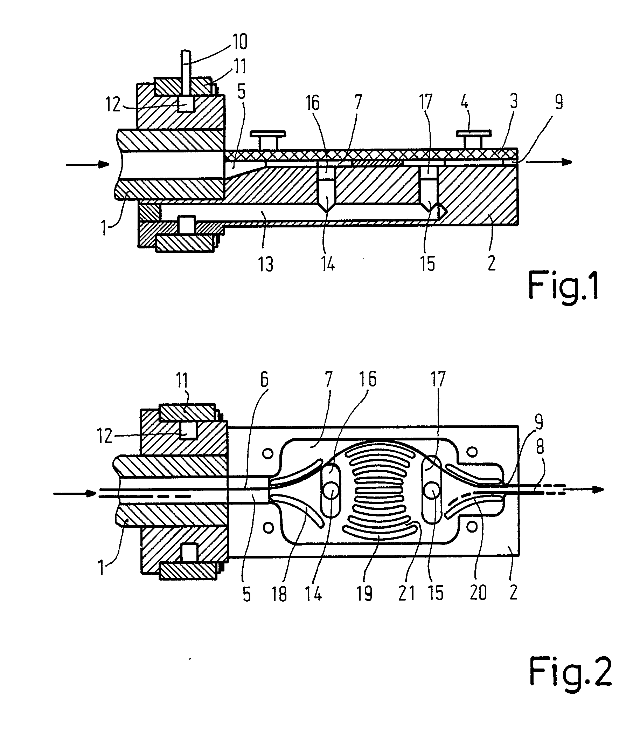

In den zwischen dem Grundkörper 2 und dem nach Lösen der Schrauben 4 abnehmbaren Abschlußdeckel 3 ist eine Gelkammer 7 gebildet, in welche durch die Einführungsöffnung 5 ein Stapel von zehn LWL-Flachbändern einläuft. In Fig. 2 ist lediglich der Weg eines äußeren LWL-Flachbandes 6 angedeutet.

Nach Aufweitung des einlaufenden Stapels innerhalb der Gelkammer 7 werden die benetzten Flachbänder wieder zu einem Stapel 8 zusammengeführt, welcher die Benetzungseinrichtung durch die enge Auslaßöffnung 9 verläßt.

Ein gelartiges Benetzungsmittel wird von einer nicht dargestellten unter Druck zuführenden Zuführeinrichtung über die Rohrleitung 10 zugeführt, welche durch die nicht rotierende Lagerschale 11 in einen Ringkanal 12 der rotierenden Benetzungseinrichtung mündet. Von dort gelangt das Benetzungsmittel über die Längsbohrung 13 und über zwei Querbohrungen 14 und 15 und weiter über die Verteilerkanäle 16 und 17 unter Druck in die Gelkammer 7, welche als flache offene Ausnehmung im Grundkörper 2 in Verbindung mit dem Abschlußdeckel 3 gebildet ist.

Die Tiefe der Ausnehmung entspricht etwa der Breite der LWL-Flachbänder 6, welche hochkant durch die Gelkammer 7 geführt sind.

Der aufgespreizte Verlauf der Gruppe der LWL-Flachbänder wird durch eingesetzte Führungsstege 18, 19 und 20 bewirkt, welche derart gekrümmte Gleitflächen bilden, daß keine zu engen Krümmunsradien der LWL-Flachbänder verursacht werden. Die Führungsstege 19 bilden zehn Führungskanäle 21 für je ein LWL-Flachband. Der lichte Abstand zwischen zwei Führungsstegen 19 beträgt im Ausführungsbeispiel etwa das zweifache der Dicke eines LWL-Flachbandes.

Da der Abschlußdeckel 3 abgenommen werden kann, ist die Gelkammer 7 für Reinigungszwecke und zur Einfädelung der LWL-Flachbänder 6 leicht zugänglich.

## Ansprüche

1. Verfahren zur Herstellung eines optischen Kabels, in dessen innere extrudierte Hülle ein Stapel aus mehreren LWL-Flachbändern einzubringen ist,
dadurch gekennzeichnet, daß der Stapel vor dem Einlauf in einen Extruder durch eine mit einem gelartigen Benetzungsmittel gefüllte Benetzungseinrichtung geführt wird, in welcher die einzelnen LWL-Flachbänder (6) zunächst aufgespreizt und dann wieder zu einem kompakten Stapel (8) vereinigt werden.

2. Anordnung zur Ausübung des Verfahrens nach Anspruch 1,
dadurch gekennzeichnet, daß die einzelnen LWL-Flachbänder (6) durch deren Abstände vergrößernde, sich über einen kurzen mittleren Längsbereich einer gelgefüllten Gelkammer (7) erstreckende Führungskanäle (29) geführt sind, die eine lichte Weite von mehr als das 1,5 fache der Dicke der Flachbänder (6) aufweisen.

3. Anordnung nach Anspruch 2,
dadurch gekennzeichnet, daß die Benetzungseinrichtung vor dem Extruder an einer den aus LWL-Flachbändern gebildeten Stapel (8) tordierenden Einrichtung (1) mitdrehbar angeordnet ist.

4. Anordnung nach Anspruch 3,
dadurch gekennzeichnet, daß das Benetzungsmittel über einen zur Drehachse koaxialen, in einem mitrotierendem Bauteil eingebrachten Ringkanal (12) zugeführt ist, in welchem eine nicht rotierende Zuleitung (10) mündet, welche durch ein den Ringkanal (12) abschließendes nicht rotierendes Gleitelement (11) geleitet ist.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 105 485 (PORTINARI et al.) * Figur 1; Spalte 6, Zeilen 26-40; Ansprüche 1,3,6 * | 1-3 | G 02 B 6/44 |
| Y | DE-A-3 606 626 (SIEMENS) * Anspruch 1; Figur 1 * | 1-3 | |
| A | GB-A-1 464 747 (WEIDNER) * Ansprüche 1,4; Figur 1 * | 1,2 | |
| A | US-A-4 129 468 (KNAB) * Spalte 3, Zeilen 57-67; Spalte 8, Zeilen 9-11; Figuren 8,10,11 * | 1,3,4 | |
| A | DE-A-3 045 941 (SIEMENS) * Anspruch 1; Figur 1 * | 4 | |

RECHERCHIERTE
SACHGEBIETE (Int. Cl.4)

G 02 B 6
H 01 B 13

Der vorliegende Recherchenbericht wurde für alle Patentansprüche erstellt

| Recherchenort | Abschlußdatum der Recherche | Prüfer |
|---|---|---|
| DEN HAAG | 12-04-1989 | BARBER S.P. |